# EUROPEAN PATENT APPLICATION

(11) **EP 4 711 894 A1**
(43) Date of publication of application: **18.03.2026**
(21) Application number: 25201099.6
(22) Date of filing: 09.09.2025
(51) Int. Cl.: G06F 1/3231, G03G 15/00, G06F 1/3234, G06F 1/3287, H04N 1/00, G06F 3/12, G06F 1/3228

(54) **ELECTRONIC DEVICE AND IMAGE FORMING APPARATUS**

(30) Priority: 17.09.2024 JP 2024160395
(71) Applicant: KYOCERA Document Solutions Inc., Osaka-shi, Osaka 540-8585 (JP)
(72) Inventor: OKAZAKI, Yusuke, Osaka-shi, Osaka, 540-8585 (JP)
(74) Representative: Herrero & Asociados, S.L.

(57) **Abstract**

In an image forming apparatus, a controller (31) executes transition processing for allowing the image forming apparatus to transition from a first power state to a second power state where less electric power is consumed than in the first power state. When a person is detected by a human detection sensor (25) during the second power state, the controller (31) executes return processing for setting the image forming apparatus to the first power state. When a user is detected by the human detection sensor (25) during execution of the transition processing, the controller (31) suspends the transition processing, maintains the image forming apparatus in a state midway through transition from the first to second power state. When a period of suspension of the transition processing reaches a specific time, the controller (31) restarts the transition processing and sets the image forming apparatus to the second power state.

## Description

### BACKGROUND

The present invention relates to an electronic device and an image forming apparatus appropriately switchable between a first power state and a second power state where less electric power is supplied than in the first power state and particularly relates to a technique for switching between the first power state and the second power state based on the detection output of a human detection sensor.

An image forming apparatus as an example of an electronic device includes: an image reading device that reads an image of an original document; and an image forming device that forms the read image of the original document on a recording paper sheet. Furthermore, the image forming apparatus appropriately switches between a first power state (a normal power mode) in which electric power necessary to run the image forming apparatus is supplied and a second power state (a power saving mode) in which less electric power is supplied than in the first power state, thus reducing power consumption while running the image forming apparatus.

There is also proposed an image processing device that transitions from a second power state (a power saving mode) to a first power state (a normal power mode) upon detection of a user by a human detection sensor, transitions from the first power state to the second power state upon instruction to transition to the second power state by a user's operation, and then inhibits the transition to the first power state until the user becomes undetectable by the human detection sensor. Thus, a phenomenon can be prevented that even right after the image processing device transitions from the first power state to the second power state according to a user's operation, the user being about to leave the image processing device is detected by the human detection sensor and, thus, the image processing device returns to the first power state.

### SUMMARY

A technique improved over the aforementioned techniques is proposed as one aspect of the present invention.

An electronic device according to a first aspect of the present invention includes a human detection sensor, an operation device, and a controller. The human detection sensor detects a person existing within a predetermined range around the electronic device. The operation device accepts an input of an instruction. The controller sets the electronic device to a first power state where the electronic device is ready to normally operate or a second power state where the electronic device consumes less electric power than in the first power state. When a person is detected by the human detection sensor while the electronic device is set to the second power state, the controller allows the electronic device to transition to the first power state. When the operation device accepts an input of an instruction to allow the electronic device to transition from the first power state to the second power state, the controller executes transition processing for allowing the electronic device to transition from the first power state to the second power state and sets the electronic device to the second power state. When a person is detected by the human detection sensor during execution of the transition processing, the controller suspends the transition processing and maintains the electronic device in a state midway through transition from the first power state to the second power state. When a period of suspension of the transition processing reaches a predetermined specific time, the controller restarts the transition processing and then sets the electronic device to the second power state with completion of the transition processing.

An image forming apparatus according to a second aspect of the present invention includes: the electronic device according to the first aspect of the present disclosure; and an image forming device. The image forming device forms an image on a recording medium.

### BRIEF DESCRIPTION OF THE DRAWINGS

FIG. 1 is a cross-sectional view showing an image forming apparatus according to one embodiment of the present invention.
FIG. 2 is a block diagram showing an essential configuration of the image forming apparatus according to the embodiment.
FIG. 3 is a flowchart showing a control procedure for switching the image forming apparatus between a first power state and a second power state and setting it to the appropriate state.
FIG. 4 is a timing chart showing the process from when, with the image forming apparatus set to the first power state, transition processing for allowing the image forming apparatus to transition from the first power state to the second power state is executed to set the image forming apparatus to the second power state to when the image forming apparatus is set to the first power state again according to the detection of a user by a human detection sensor.
FIG. 5 is a timing chart showing the process from when the transition processing for allowing the image forming apparatus to transition from the first power state to the second power state is suspended according to the detection of a user by the human detection sensor to when a user's operation on the image forming apparatus is done during suspension of the transition processing and, thus, the image forming apparatus is set to the first power state.
FIG. 6 is a timing chart showing the process from when the transition processing for allowing the image forming apparatus to transition from the first power state to the second power state is suspended according to the detection of a user by the human detection sensor to when the suspended transition processing is restarted and the image forming apparatus is set to the second power state.
FIG. 7 is a flowchart showing a modification of the control procedure for switching the image forming apparatus between the first power state and the second power state and setting it to the appropriate state.

### DETAILED DESCRIPTION

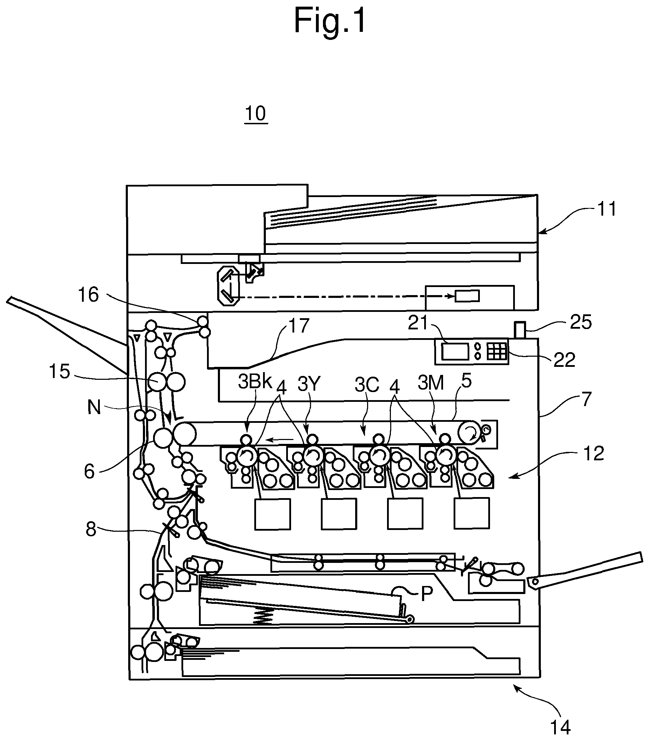

Hereinafter, a description will be given of an electronic device and an image forming apparatus according to one embodiment of the present invention with reference to the drawings. FIG. 1 is a cross-sectional view showing an image forming apparatus according to one embodiment of the present invention. As shown in FIG. 1, an image forming apparatus 10 according to this embodiment is an MFP (a multifunction peripheral) having multiple functions, such as a copy function, a print function, and a facsimile function. This image forming apparatus 10 includes an image reading device 11 and an image forming device 12. The image forming apparatus 10 is also an example of the electronic device according to the present invention.

The image reading device 11 includes an image pickup device (such as a CCD sensor) that optically reads an image of an original document, wherein an analog output of the image pickup device is converted to a digital signal to generate image data representing the image of the original document.

The image forming device 12 forms an image represented by the above image data on a recording paper sheet, and includes an image forming unit 3M for magenta, an image forming unit 3C for cyan, an image forming unit 3Y for yellow, and an image forming unit 3Bk for black. In each of the image formation units 3M, 3C, 3Y, and 3Bk, the surface of a photosensitive drum 4 is uniformly charged and then exposed to light to form an electrostatic latent image on the surface, the electrostatic latent image on the surface of the photosensitive drum 4 is developed to a toner image, and the toner image on the surface of the photosensitive drum 4 is primarily transferred to an intermediate transfer belt 5. Thus, a multicolor toner image is formed on the intermediate transfer belt 5. This multicolor toner image is secondarily transferred, at a nip region N between the intermediate transfer belt 5 and a secondary transfer roller 6, to a recording paper sheet P conveyed from a sheet feed device 14 via a conveyance path 8.

Thereafter, heat and pressure are applied to the recording paper sheet P by a fixing device 15, the toner image on the recording paper sheet P is thus fixed by heat and pressure, and the recording paper sheet P is then ejected through an ejection roller 16 to a sheet output tray 17.

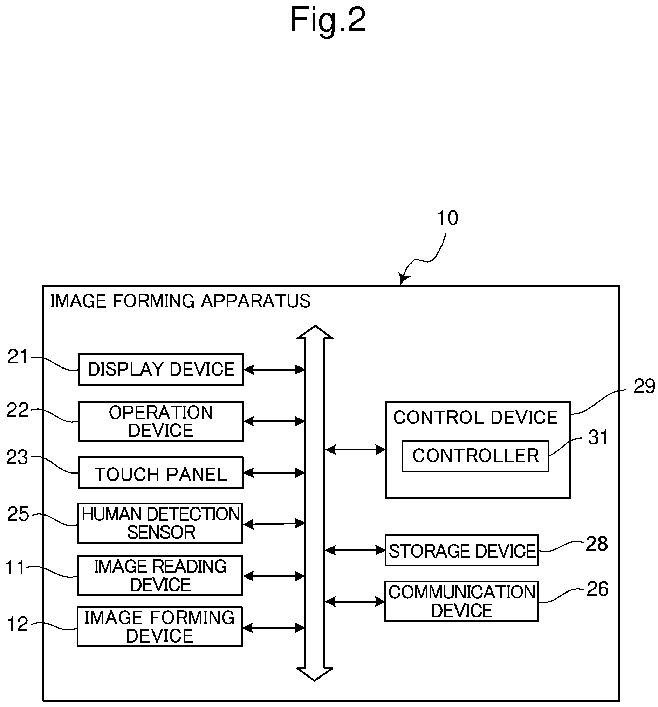

Next, FIG. 2 is a block diagram showing an essential internal configuration of the image forming apparatus 10 according to this embodiment. As shown in FIG. 2, the image forming apparatus 10 according to this embodiment includes the image reading device 11, the image forming device 12, a display device 21, an operation device 22, a touch panel 23, a human detection sensor 25, a communication device 26, a storage device 28, and a control device 29. These components are capable of sending and receiving data or signals to and from each other via a bus.

The display device 21 is composed of a liquid crystal display (LCD), an organic EL (an organic light-emitting diode (OLED)) display or others.

The operation device 22 includes physical keys, including numeric keys, a decision key, and a start key. The operation device 22 accepts an input of an instruction according to a user's operation on each of the keys.

The touch panel 23 is disposed over the screen of the display device 21. The touch panel 23 is a touch panel of a so-called resistive film system, a capacitance system or so on, detects a touch on the touch panel 23 with a user's finger or the like, together with a point of the touch, and outputs a detection signal indicating the coordinate of the point of touch to a below-described controller 31 of the control device 29 and so on.

The human detection sensor 25 is a known sensor that detects a person present in front of the image forming apparatus 10. For example, the human detection sensor 25 is an infrared sensor that detects infrared rays emitted from a human body.

The communication device 26 is a communication interface and transfers data via a network (such as an intranet) to and from an external device, such as a server.

The storage device 28 is a large storage device, such as an SSD (solid state drive) or an HDD (hard disk drive) and stores various types of application programs and various types of data.

The control device 29 is made up of a processor, a RAM (random access memory), a ROM (read only memory), and so on. The processor is, for example, a CPU (central processing unit), an ASIC (application specific integrated circuit) or an MPU (micro processing unit). When a control program stored in the above ROM or the storage device 28 is executed by the above processor, the control device 29 functions as the controller 31.

The controller 31 performs the overall control of the image forming apparatus 10. The control device 29 is connected to the image reading device 11, the image reading device 12, the display device 21, the operation device 22, the touch panel 23, the human detection sensor 25, the communication device 26, the storage device 28, and so on. The controller 31 performs the operation control of these components and signal or data transfer to and from each of these components.

The controller 31 serves as a processor that executes various types of processing necessary for image formation by the image forming apparatus 10. The controller 31 also has the function of controlling the display operation of the display device 21 and the function of controlling the communication operation of the communication device 26.

The controller 31 accepts, based on a detection signal output from the touch panel 23 or an operation made on a physical key of the operation device 22, an operating instruction input by the user. For example, the controller 31 accepts, through the touch panel 23, an instruction according to a touch gesture on a GUI (graphic user interface) or the like displayed on the screen of the display device 21.

Furthermore, the controller 31 acquires a detection output of the human detection sensor 25 and detects whether or not a person is present, based on whether the acquired detection output reaches or exceeds a predetermined threshold, i.e., whether a signal output from the human detection sensor 25 is a person detection signal indicating the detection of a person.

On the image forming apparatus 10 having the above structure and configuration, for example, when a user places an original document in the image reading device 11 and operates the start key of the operation device 22, the controller 31 allows the image reading device 11 to read an image of the original document and allows the image forming device 12 to print the image of the original document on a recording paper sheet.

Furthermore, the controller 31 of the image forming apparatus 10 appropriately switches the state of the image forming apparatus 10 between a first power state (a normal power mode) in which the image forming apparatus 10 is ready to normally operate and a second power state (a power saving mode, i.e., a so-called sleep mode) in which less electric power is supplied than in the first power state, and sets the image forming apparatus 10 to the appropriate state. The first power state is a state where electric power necessary for a normal operation of the image forming apparatus 10, for example, electric power necessary for operations of the display device 21, the communication device 26, the storage device 28, the image reading device 11, the image forming device 12, and so on, is supplied to the image forming apparatus 10. On the other hand, the second power state is a state where, for example, the electric power necessary for operations of the display device 21, the communication device 26, the storage device 28, the image reading device 11, the image forming device 12, and so on is saved or the supply of the electric power is stopped.

However, in both the first power state and the second power state, electric power is supplied to the human detection sensor 25 and detection by the human detection sensor 25 is performed. Furthermore, in either power state, electric power is supplied also to the touch panel 23 and sensors as predetermined devices for detecting user's operations, including a sensor for detecting the operations on the keys of the operation device 22 and a sensor for detecting an original document placed in the image reading device 11, and, thus, detections by the touch panel 23 and the sensors are performed.

The touch panel 23 and the sensors correspond to the operation detecting device defined as a device that detects a user's operation in CLAIMS.

When, with the image forming apparatus 10 set to the second power state, a user is detected by the human detection sensor 25, the controller 31 of the image forming apparatus 10 sets the image forming apparatus 10 to the first power state to enable the image forming apparatus 10 to normally operate.

On the other hand, when, with the image forming apparatus 10 set to the first power state, an instruction to allow the image forming apparatus 10 to transition from the first power state to the second power state is input to the operation device 22 by a user's operation, the controller 31 of the image forming apparatus 10 executes transition processing for allowing the image forming apparatus 10 to transition to the second power state to set the image forming apparatus 10 to the second power state.

In an image forming apparatus not according to this embodiment, there may be a case where even right after the image forming apparatus has been allowed to transition from the first power state to the second power state, a user being about to leave the image forming apparatus is detected by the human detection sensor and, thus, the image forming apparatus is set back to the first power state. In another technique in which, as in Patent Literature 1, the transition to the first power state is inhibited until a user becomes undetectable by the human detection sensor, when a different user comes close to the image forming apparatus just after the previous user has left it, the human detection sensor detects the different user, the image forming apparatus is thus continued to be held in the second power state without being set to the first power state, and, therefore, the different user cannot operate the image forming apparatus to use it normally.

Unlike the above techniques, in this embodiment, when a user is detected by the human detection sensor 25 during execution of transition processing for allowing the image forming apparatus 10 to transition from the first power state to the second power state, the controller 31 of the image forming apparatus 10 suspends the transition processing. In doing so, the controller 31 maintains the image forming apparatus 10 in a state midway through the transition from the first power state to the second power state. Furthermore, the processing of inhibiting the transition to the first power state until a user becomes undetectable by the human detection sensor, as in Patent Literature 1, is not executed by the controller 31.

Then, when a period T1 of suspension of the transition processing reaches a predetermined specific time Δt1 (for example, three to five seconds), the controller 31 restarts the transition processing and sets the image forming apparatus 10 to the second power state. Because it is assumed that the previous user leaves the image forming apparatus 10 in the specific time during which the transition processing is suspended, the transition processing is restarted after the passage of the specific time and, thus, the image forming apparatus is set to the second power state.

When, during suspension of the transition processing, the previous user leaves the image forming apparatus 10 and a different user then comes close to the image forming apparatus 10 and operates the image forming apparatus 10, the controller 31 executes return processing for returning the image forming apparatus 10 to the first power state and sets the image forming apparatus 10 to the first power state. For example, when a return instruction to return the image forming apparatus 10 from the second power state to the first power state is input to the operation device 22 or when the touch panel 23 or any sensor serving as the operation detecting device detects a user's operation, the controller 31 executes the above return processing to set the image forming apparatus 10 to the first power state. Therefore, when a different user operates the image forming apparatus 10 even in the middle of transition processing for allowing the image forming apparatus 10 to transition from the first power state to the second power state, the image forming apparatus 10 can immediately return to the first power state and the different user can operate and use the image forming apparatus 10 normally.

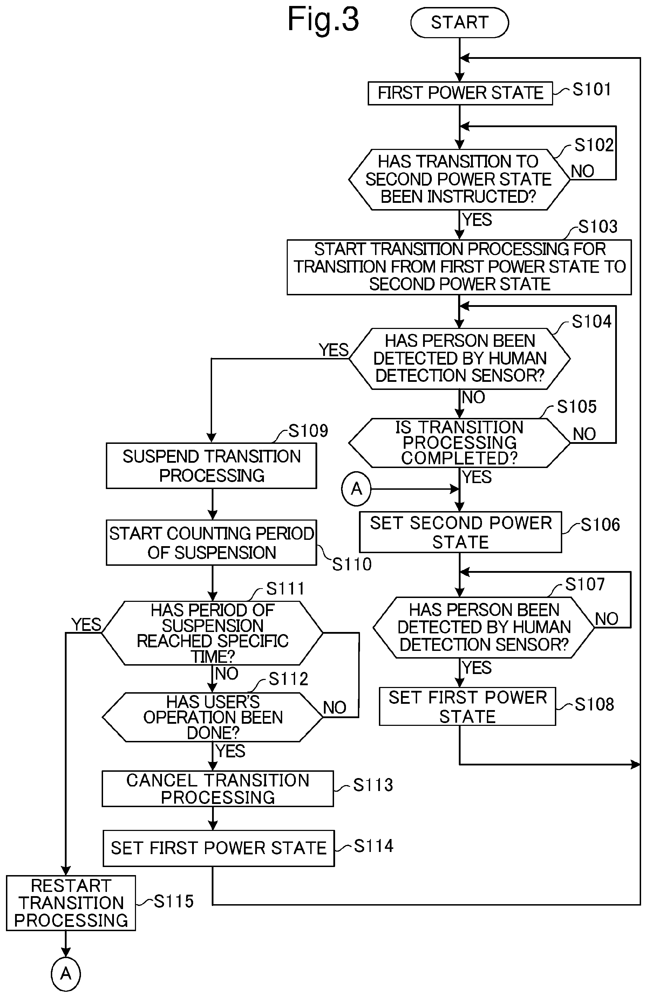

Next, a detailed description will be given of a control procedure for switching the image forming apparatus 10 between the first power state and the second power state and setting it to the appropriate state in the above manner, with reference to the flowchart shown in FIG. 3 and other drawings.

While the image forming apparatus 10 is set to the first power state (S101), the controller 31 of the image forming apparatus 10 determines whether a transition instruction to allow the image forming apparatus 10 to transition from the first power state to the second power state has been input to the operation device 22 by a user's operation (S102).

Unless determining that the transition instruction has been input ("No" in S102), the controller 31 does not set the image forming apparatus 10 to the second power state and maintains the image forming apparatus 10 in the first power state (S101).

On the other hand, when determining that the transition instruction has been input ("Yes" in S102), the controller 31 starts, in accordance with the transition instruction, transition processing for allowing the image forming apparatus 10 to transition from the first power state to the second power state (S103).

Alternatively, the GUI displayed on the display device 21 or the touch panel 23 may accept the transition instruction as the operation device defined in CLAIMS.

The transition processing is processing for setting the image forming apparatus 10 to, instead of the first power state, the second power state where electric power necessary for the operations of, for example, the display device 21, the communication device 26, the storage device 28 (the HDD), the controller 31, the image reading device 11, the image forming device 12, and so on is saved or the supply of the electric power is stopped. This processing is executed in a predetermined procedure. For example, in the second power state, the backlight of the display device 21 is turned off, the communication device 26 is deactivated, the storage device 28 (the HDD) is deactivated, and a print engine performed by the controller 31 is deactivated. Furthermore, in the image reading device 11, power consumption of a drive source, such as a motor, is reduced and a light source for lighting an image of an original document is turned off. In the image forming device 12, power consumption of a drive source, such as a motor, is reduced and power consumption of a heater in the fixing device is reduced.

During execution of the transition processing, the controller 31 determines whether or not a user has been detected by the human detection sensor 25 (S104) and determines whether or not the transition processing is completed (S105).

When, in doing so, the controller 31 determines that any user has not been detected by the human detection sensor 25 ("No" in S104) and then determines that the transition processing is completed ("Yes" in S105), the controller 31 sets the image forming apparatus 10 to the second power state (S106).

After the setting to the second power state, the controller 31 waits for a user to be detected by the human detection sensor 25 ("No" in S107). When a user is detected ("Yes" in S107), the controller 31 executes return processing to allow the image forming apparatus 10 to transition from the second power state to the first power state and set the image forming apparatus 10 to the first power state (S108) and then goes back to S101.

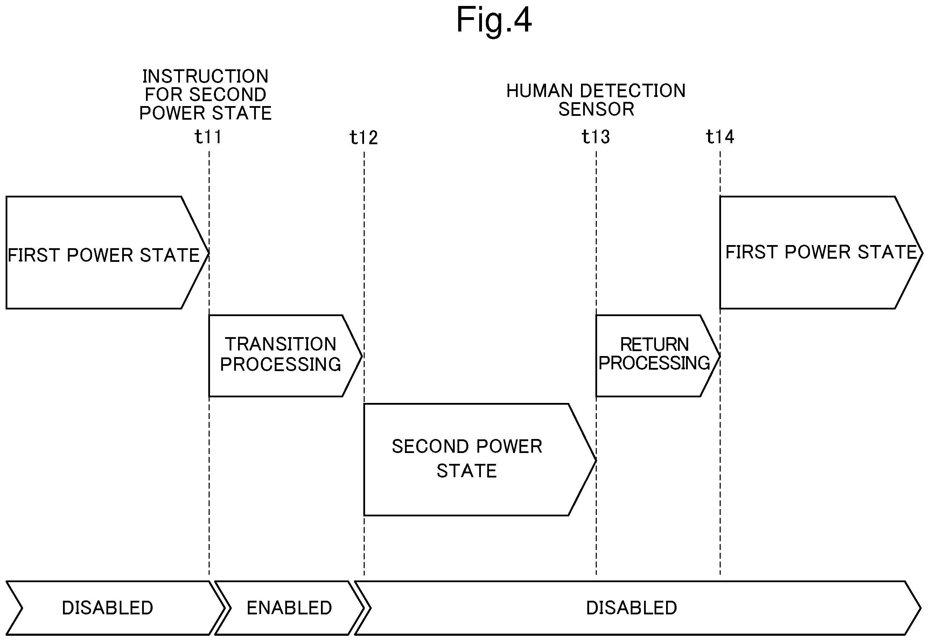

The above processing from S101 to S108 will be described with reference to a timing chart. FIG. 4 is a timing chart showing the process from when, with the image forming apparatus 10 set to the first power state, the transition processing for allowing the image forming apparatus 10 to transition from the first power state to the second power state is executed to set the image forming apparatus 10 to the second power state to when the image forming apparatus 10 is set to the first power state again according to the detection of a user by the human detection sensor 25.

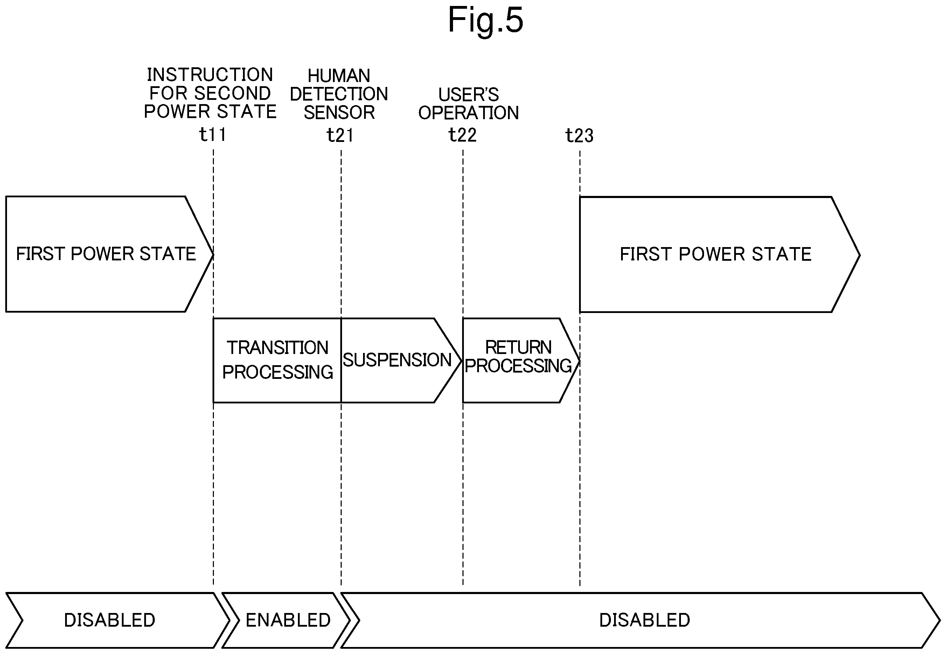

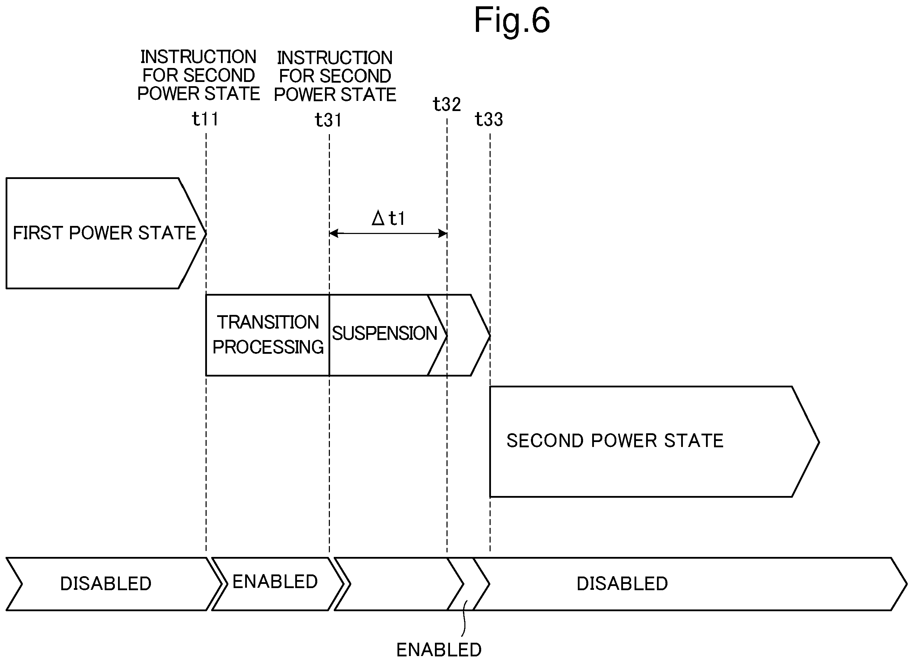

As shown in FIG. 4, when, in the first power state of the image forming apparatus 10, a transition from the first power state to the second power state is instructed at a time point t11, the transition processing for allowing the image forming apparatus 10 to transition from the first power state to the second power state is started. Then, at a time point t12 when the transition processing is completed, the image forming apparatus 10 is set to the second power state. Thereafter, when a user is detected by the human detection sensor 25 at a time point t13 during the second power state, the return processing is started. Then, at a time point t14 when the return processing is completed, the image forming apparatus 10 is set to the first power state. In FIG. 4, the period of execution of the transition processing is shown by the term "Enabled" and the period of non-execution of the transition processing is shown by the term "Disabled" (the same applies to FIGS. 5 and 6 below).

When in S105 the controller 31 determines that the transition processing is not completed ("No" in S105), the controller 31 determines whether or not a user has been detected by the human detection sensor 25 (S104). When determining that a user has been detected by the human detection sensor 25 ("Yes" in S104), the controller 31 suspends the transition processing (S109), maintains the image forming apparatus 10 in a state midway through the transition from the first power state to the second power state, and starts counting the period T1 of suspension from the time point of suspension of the transition processing (S110).

Then, the controller 31 determines whether or not the period T1 of suspension has reached the predetermined specific time Δt1 (S111) and determines whether or not a user's operation on the image forming apparatus 10 has been done (S112).

In this relation, the above user's operation on the image forming apparatus 10 includes an input of an instruction to the operation device 22, a user's operation on the touch panel 23, a user's operation on the operation device 22, a user's operation of placing an original document in the image reading device 11, and so on. The controller 31 determines the user's operation based on the output from the operation device 22, the detection output of the touch panel 23, the detection output of a sensor for detecting an operation on any key of the operation device 22, the detection output of a sensor for detecting an original document placed in the image reading device 11, and so on.

The user's operation subject to determination in S112 is set apart from the user's operation subject to determination in S102, i.e., the user's operation on the GUI or the touch panel 23 for instructing to allow the image forming apparatus 10 to transition from the first power state to the second power state.

For example, when the controller 31 determines that a user's operation on the image forming apparatus 10 has been done ("Yes" in S112) before determining that the period T1 of suspension has reached the specific time Δt1 ("No" in S111), the controller 31 cancels the transition processing (S113), starts return processing for setting the image forming apparatus 10 to the first power state, and sets it to the first power state (S114). Thereafter, the processing goes back to S101.

The return processing is processing for setting the image forming apparatus 10 to the first power state where, contrary to the transition processing, the supply of electric power necessary for the operations of the display device 21, the communication device 26, the storage device 28 (the HDD), the controller 31, the image reading device 11, the image forming device 12, and so on is started, and the return processing is executed in a predetermined procedure by the controller 31. For example, the backlight of the display device 21 is turned on, the communication device 26 is activated, the storage device 28 (the HDD) is activated, and the print engine performed by the controller 31 is activated. Furthermore, in the image reading device 11, the drive source, such as the motor, is activated and the light source for lighting an image of an original document is turned on. In the image forming device 12, the drive source, such as the motor, is activated and the heater in the fixing device is activated.

When the transition processing is suspended (S109) as described above, the image forming apparatus 10 is maintained in a state midway through the transition from the first power state to the second power state. Therefore, the time taken for the return processing in setting the image forming apparatus 10 to the first power state during suspension of the transition processing is shorter than the time taken for the return processing in setting the image forming apparatus 10 from the second power state to the first power state. Hence, the first power state is promptly set by a user's operation determined in S112.

The processing when the transition processing is suspended will be described with reference to a timing chart. FIG. 5 is a timing chart showing the process from when the transition processing for allowing the image forming apparatus 10 to transition from the first power state to the second power state is suspended according to the detection of a user by the human detection sensor 25 to when a user's operation on the image forming apparatus 10 is done during suspension of the transition processing and, thus, the image forming apparatus 10 is set to the first power state.

As shown in FIG. 5, the transition processing for allowing the image forming apparatus 10 to transition from the first power state to the second power state is started at the time point t11. Then, when a user is detected by the human detection sensor 25 at a time point t21, the transition processing is suspended and the image forming apparatus 10 enters a state midway through the transition. When a user's operation on the image forming apparatus 10 is done at a time point t22 during suspension of the transition processing, the return processing is started. At a time point t23 when the return processing is completed, the image forming apparatus 10 is set to the first power state.

Referring back to the flowchart in FIG. 3, when the controller 31 determines that the period T1 of suspension has reached the specific time Δt1 ("Yes" in S111) before determining that a user's operation on the image forming apparatus 10 has been done ("No" in S112), the controller 31 restarts the suspended transition processing (S115) and then sets the image forming apparatus 10 to the second power state (S106) upon completion of the transition processing.

The processing in restarting the suspended transition processing in the above manner will be described with reference to a timing chart. FIG. 6 is a timing chart showing the process from when the transition processing for allowing the image forming apparatus 10 to transition from the first power state to the second power state is suspended according to the detection of a user by the human detection sensor 25 to when the suspended transition processing is restarted and the image forming apparatus 10 is set to the second power state.

As shown in FIG. 6, the transition processing for allowing the image forming apparatus 10 to transition from the first power state to the second power state is started at the time point t11. Then, when a user is detected by the human detection sensor 25 at a time point t31, the transition processing is suspended. When the period T1 of suspension reaches the specific time Δt1 at a time point t32, the suspended transition processing is restarted. Then, the image forming apparatus 10 is set to the second power state at a time point t33 when the transition processing is completed.

Referring back to the flowchart in FIG. 3, when a user is detected by the human detection sensor 25 ("Yes" in S107) while the image forming apparatus 10 is in the second power state after S106, the controller 31 executes the return processing to allow the image forming apparatus 10 to transition from the second power state to the first power state and set the image forming apparatus 10 to the first power state (S108). Thereafter, the processing goes back to S101.

As thus far described, in this embodiment, when a user is detected by the human detection sensor 25 during execution of the transition processing for allowing the image forming apparatus 10 to transition from the first power state to the second power state, the transition processing is suspended and the image forming apparatus 10 is maintained in a state midway through the transition from the first power state to the second power state. In this case, it is assumed that the user leaves the image forming apparatus 10 while the transition processing is suspended. When the period T1 of suspension of the transition processing reaches the specific time Δt1, the transition processing is restarted and the image forming apparatus 10 is set to the second power state.

Furthermore, in this embodiment, when, during suspension of the transition processing, a user different from a user involved in the setting to the second power state comes close to the image forming apparatus 10 and operates the image forming apparatus 10, the return processing for returning the image forming apparatus 10 to the first power state is executed to set the image forming apparatus 10 to the first power state. Therefore, when a different user operates the image forming apparatus 10 even in the middle of transition from the first power state to the second power state, the image forming apparatus 10 is immediately set to the first power state.

In addition, in this embodiment, there is no need to adopt a human detection sensor capable of distinguishing between user's approaching and leaving the image forming apparatus, which enables avoidance of a cost increase.

### <Modification>

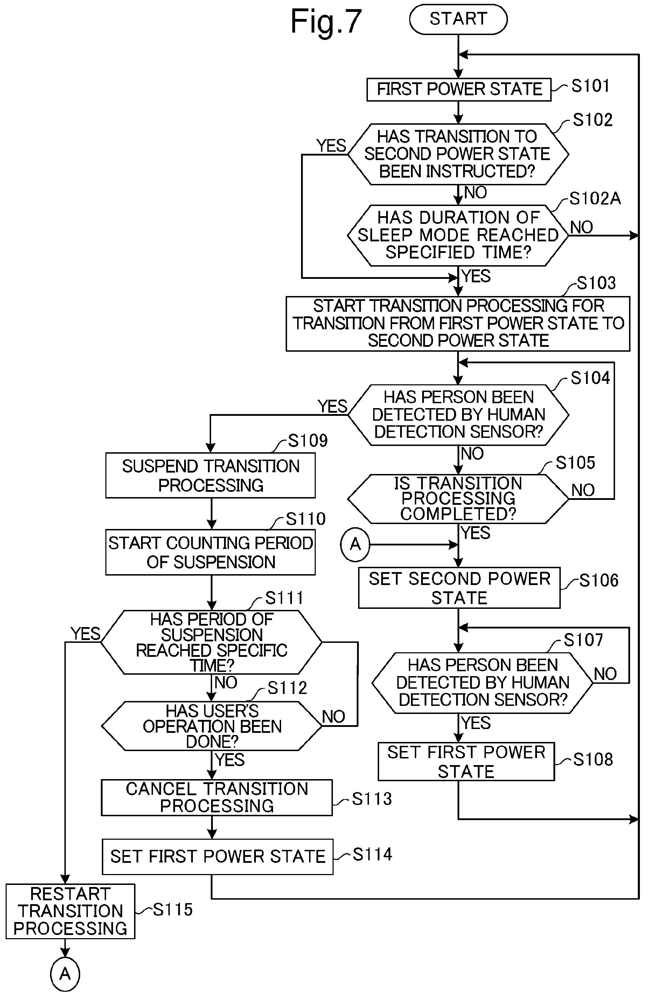

FIG. 7 is a flowchart showing a modification of the control procedure for switching the image forming apparatus 10 between the first power state and the second power state and setting it to the appropriate state.

In the control procedure in the modification shown in FIG. 7, the controller 31 executes the determination of whether or not the transition of the image forming apparatus 10 from the first power state to the second power state has been instructed (S102) in parallel with the determination of whether or not a duration T2 for which the image forming apparatus 10 keeps from performing an operation based on a job has reached a predetermined specified time Δt2 (S102A).

While the image forming apparatus 10 is set to the first power state (S101), the controller 31 of the image forming apparatus 10 determines whether the transition of the image forming apparatus 10 from the first power state to the second power state has been instructed based on a user's operation through the touch panel 23 on the GUI displayed on the display device 21 (S102) and, concurrently, the controller 31 counts the duration T2 of the image forming apparatus 10 and determines whether or not the duration T2 has reached the predetermined specified time Δt2 (S102A).

Unless determining that a transition instruction to allow the image forming apparatus 10 to transition from the first power state to the second power state has been input ("No" in S102) and unless determining that the duration T2 of the image forming apparatus 10 has reached the specified time Δt2 ("No" in S102A), the controller 31 maintains the image forming apparatus 10 in the first power state (S101).

On the other hand, when determining that the transition instruction has been input ("Yes" in S102) or determining that the duration T2 of the image forming apparatus 10 has reached the specified time Δt2 ("Yes" in S102A), the controller 31 starts the transition processing for allowing the image forming apparatus 10 to transition from the first power state to the second power state (S103). Thereafter, the processing in S104 to S115 described previously in the above embodiment is executed.

Although in the above embodiment the specific time Δt1 for use in comparison with the period T1 of suspension is a predetermined time, the specific time Δt1 may be able to be arbitrarily set by the user. For example, the controller 31 sets as the specific time Δt1 an arbitrary time indicated by an instruction input to the operation device 22.

Among image processing devices not according to the above embodiment, there is an image processing device in which once a transition from the first power state to the second power state is made, a transition back to the first power state is inhibited until a user becomes undetectable by a human detection sensor, which prevents the phenomenon that a user being about to leave the image processing device is detected by the human detection sensor and, thus, the image processing device returns to the first power state. However, in this image processing device not according to the above embodiment, even if a different user comes close to the image processing device just after a previous user has left it and the human detection sensor detects the different user, the image processing device is held in the second power state without being set to the first power state and, therefore, the different user cannot operate the image processing device to use it normally.

If a human detection sensor capable of distinguishing between user's approaching and leaving the image processing device is adopted, a user leaving the device can be distinguished from another user approaching the device and the first power state or the second power state may be able to be appropriately set. However, the adoption of such a high-performance human detection sensor increases the cost.

Unlike these conventional techniques, in the above embodiment, the power state of the device can be switched to a state appropriate to the user without use of a high-performance human detection sensor.

The structures, configurations, and processing of the above embodiment and modification described with reference to FIGS. 1 to 7 are merely illustrative and are not intended to limit the present invention to them.

## Claims

1. An electronic device (10) comprising:
a human detection sensor (25) that detects a person existing within a predetermined range around the electronic device (10);
an operation device (22) that accepts an input of an instruction; and
a controller (31) that sets the electronic device (10) to a first power state where the electronic device (10) is ready to normally operate or a second power state where the electronic device (10) consumes less electric power than in the first power state, the controller (31) allowing the electronic device (10) to transition to the first power state when a person is detected by the human detection sensor (25) while the electronic device (10) is set to the second power state,
wherein when the operation device (22) accepts an input of an instruction to allow the electronic device (10) to transition from the first power state to the second power state, the controller (31) executes transition processing for allowing the electronic device (10) to transition from the first power state to the second power state and sets the electronic device (10) to the second power state,
when a person is detected by the human detection sensor (25) during execution of the transition processing, the controller (31) suspends the transition processing and maintains the electronic device (10) in a state midway through transition from the first power state to the second power state, and
when a period of suspension of the transition processing reaches a predetermined specific time, the controller (31) restarts the transition processing and then sets the electronic device (10) to the second power state with completion of the transition processing.

2. The electronic device (10) according to claim 1, wherein when a person is detected by the human detection sensor (25) and the transition processing is suspended, the controller (31) maintains the electronic device (10) in the state midway through the transition regardless of whether or not a person is detected by the human detection sensor (25) since suspension of the transition processing.

3. The electronic device (10) according to claim 1,
further comprising an operation detecting device (23) that detects a user's operation on the electronic device (10),
wherein when, during suspension of the transition processing, an instruction to return the electronic device (10) from the second power state to the first power state is input to the operation device (22) or the user's operation is detected by the operation detecting device (23), the controller (31) executes return processing for returning the electronic device (10) from the second power state to the first power state to set the electronic device (10) to the first power state.

4. The electronic device (10) according to claim 1, wherein the controller (31) sets as the specific time an arbitrary time indicated by an instruction input to the operation device (22).

5. The electronic device (10) according to claim 1, wherein
the controller (31) counts a duration for which the electronic device (10) keeps from performing an operation based on a job while the electronic device (10) is set to the first power state,
when the duration reaches a predetermined specified time, the controller (31) executes the transition processing to set the electronic device (10) to the second power state,
when a person is detected by the human detection sensor (25) during execution of the transition processing based on reaching of the duration to the specified time, the controller (31) suspends the transition processing and maintains the electronic device (10) in a state midway through transition from the first power state to the second power state, and
when a period of suspension of the transition processing reaches a predetermined specific time, the controller (31) restarts the transition processing and then sets the electronic device (10) to the second power state with completion of the transition processing.

6. An image forming apparatus (10) comprising:
the electronic device (10) according to claim 1; and
an image forming device (12) that forms an image on a recording medium.
